# FASCICULE DE BREVET EUROPEEN

(11) **EP 3 379 669 B1**
(45) Date de publication et mention de la délivrance du brevet: **13.03.2019**
(21) Numéro de dépôt: 18151566.9
(22) Date de dépôt: 15.01.2018
(51) Int. Cl.: H02H 3/04, H01H 9/18, H01H 21/02, H01H 3/04, H01H 71/04, H02H 3/08

(54) **APPAREIL DE COUPURE DE COURANT ÉLECTRIQUE COMPORTANT UN AFFICHEUR À CRISTAUX LIQUIDES ET UN MÉCANISME PRESSEUR**
STROMUNTERBRECHUNGSGERÄT, DAS EINE FLÜSSIGKRISTALLANZEIGE UND EINEN DRUCKMECHANISMUS UMFASST
ELECTRIC CURRENT SWITCHGEAR COMPRISING A LIQUID CRYSTAL DISPLAY AND A PRESSER MECHANISM

(30) Priorité: 23.03.2017 FR 1752387
(43) Date de publication de la demande: 26.09.2018
(73) Titulaire: Schneider Electric Industries SAS, 92500 Rueil-Malmaison (FR)
(72) Inventeur: GLAS, Carine, 38050 Grenoble (FR); VINCENT, François, 38050 Grenoble (FR)
(74) Mandataire: Tripodi, Paul

(56) Documents cités:
- EP-A2- 0 226 530
- DE-A1-102007 022 002
- FR-A1- 2 901 912
- US-A- 4 969 063

## Description

### DOMAINE TECHNIQUE

La présente invention concerne un appareil de coupure de courant électrique comportant :
- au moins un conducteur de courant,
- au moins un contact électrique, relié en série avec le conducteur de courant, ledit contact ayant une position fermée pour établir la circulation du courant dans le conducteur de courant et une position ouverte pour couper le courant dans le conducteur de courant,
- une manette d'actionnement agencée pour actionner le contact électrique en position fermée ou en position ouverte,
- un afficheur à cristaux liquides,
- un circuit de commande d'affichage, relié à l'afficheur, pour commander un affichage sur l'afficheur à cristaux liquides.

### ETAT DE LA TECHNIQUE

Les appareils de coupure de courant électrique tels que les disjoncteurs, contacteurs ou interrupteurs, comportent très fréquemment un moyen d'affichage tel qu'un écran à cristaux liquides. Ce moyen permet d'afficher à l'utilisateur des informations sur des valeurs de paramètres mesurés par l'appareil, par exemple des valeurs d'intensité de courant, l'état de l'appareil, ou encore la raison d'une manoeuvre exécutée par l'appareil. Ce moyen d'affichage est particulièrement utile quand l'appareil de coupure a procédé à l'ouverture du circuit électrique de manière automatique. Par exemple un disjoncteur peut commander une ouverture de ses contacts en cas de court-circuit dans l'installation électrique. Le même disjoncteur peut aussi commander une ouverture de ses contacts en cas de surcharge de l'installation électrique. Le type d'intervention demandé à l'utilisateur est différent selon qu'il y a eu un court-circuit ou une surcharge : dans le cas d'un court-circuit, l'utilisateur doit rechercher l'origine du court-circuit et réparer l'installation alors que dans le cas d'une surcharge, l'utilisateur doit simplement délester l'installation en arrêtant le fonctionnement d'un ou plusieurs équipements électriques. Ainsi, l'affichage, sur le moyen d'affichage, de la cause de l'ouverture des contacts, court-circuit ou surcharge, informe clairement l'utilisateur sur l'origine du défaut. Cependant, après avoir ouvert le circuit électrique, un appareil de coupure de courant se retrouve très souvent hors tension, en particulier quand un appareil de protection, situé en amont dans l'installation électrique, a détecté le défaut et a ouvert le circuit électrique à son niveau. Dans ce cas, l'appareil de coupure de courant est dans l'incapacité d'alimenter un moyen d'affichage pour indiquer l'origine du défaut. D'autre part, il est nécessaire de réinitialiser les données affichées sur le moyen d'affichage avant de remettre l'installation sous tension de manière à disposer d'une information actualisée si le défaut persiste lors de la remise sous tension. Pour pallier cet inconvénient, certains appareils disposent d'une réserve d'énergie sous forme de batterie. On connait en particulier le document US 5 089 928 « Processor controlled circuit breaker trip system having reliable status display » décrivant un dispositif permettant une mémorisation de la cause de déclenchement et une commande d'affichage sur un affichage à cristaux liquides. On connait également le document US 2010 /0149711 A1, «Circuit breaker with bistable display », décrivant un dispositif d'affichage bistable conservant un affichage de l'information après ouverture du circuit électrique grâce à la propriété bistable de l'affichage. Dans ces deux cas, la batterie fournit également l'énergie pour réinitialiser l'affichage après réparation et avant la remise sous tension de l'installation. On connait le document EP 2 267 465 A1 « Dispositif et procédé d'indication de défauts électriques, ensemble et tableau électrique comportant un tel dispositif ». Un tel dispositif maintient un affichage permettant la localisation de l'origine d'un défaut électrique dans une installation. Les solutions ainsi décrites sont réservées aux appareils dont le fonctionnement est assuré par des circuits électroniques de traitement, pour lesquels le coût de la réserve d'énergie est faible comparé au coût de l'ensemble des circuits ou encore aux appareils nécessitant des circuits de traitement électroniques pour assurer leur fonctionnement principal.

On connait les documents US 5 353 014 « circuit breaker with indicator lights » ou US 3 742 402 « circuit breaker with ON, OFF, and TRIP indication » qui décrivent des moyens destinés à visualiser, sous forme lumineuse, l'état de l'appareil (ouvert, fermé ou déclenché), visualisation qui est aussi donnée par la position de la manette du disjoncteur. Cependant, ne disposant pas de source d'énergie autonome, ces moyens ne sont visibles après déclenchement que si les connexions amont de l'appareil restent sous tension. L'utilisation d'un dispositif d'affichage bistable pourrait résoudre le problème de la rémanence de l'information hors tension mais ne permet pas la réinitialisation des informations affichées avant une remise sous tension. EP-A-0226530 décrit un appareil de coupure de courant électrique d'après le préambule de la revendication 1.

L'objet de l'invention est un appareil de coupure de courant comportant un dispositif d'affichage permettant un maintien des informations affichées au moment de la coupure de courant et permettant une réinitialisation des informations affichées avant une remise sous tension, sans apport d'énergie électrique auxiliaire.

### EXPOSE DE L'INVENTION

Pour cela, l'invention décrit un appareil de coupure de courant électrique comportant
- au moins un contact électrique ayant une position fermée pour établir la circulation d'un courant dans un conducteur de courant électrique et une position ouverte pour couper ledit courant dans ledit conducteur de courant,
- une manette d'actionnement agencée pour actionner le contact électrique en position fermée ou en position ouverte,
- un module d'affichage comprenant un afficheur bistable à cristaux liquides, et
- un circuit de commande d'affichage, relié à l'afficheur, pour commander un affichage d'au moins une valeur d'une grandeur électrique ou d'un état de l'appareil de coupure ou d'un symbole sur l'afficheur,
tel que l'afficheur est commandable par pression et que le module d'affichage comporte un mécanisme presseur, relié à la manette d'actionnement, ledit mécanisme presseur étant agencé pour exercer une pression sur une face de visualisation dudit afficheur lors d'une activation de la manette d'actionnement. Préférentiellement, l'afficheur comporte des cristaux liquides cholestériques.

Préférentiellement, le mécanisme presseur comprend un rouleau agencé pour rouler sur la face de visualisation de l'afficheur en exerçant une pression calibrée sur la face dudit afficheur.

Avantageusement, la pression calibrée exercée par le rouleau est comprise entre 100 grammes/cm² et 500 grammes/cm².

Selon un mode de réalisation préférentiel, le rouleau comporte un axe de rotation ayant au moins une extrémité guidée selon un contour prédéterminé.

De préférence, le mécanisme presseur comporte au moins une paroi perpendiculaire à la face de visualisation de l'afficheur, ladite paroi comportant une rainure suivant la forme du contour prédéterminé pour guider l'extrémité de l'axe de rotation du rouleau.

Avantageusement, le contour comporte une première portion parallèle et en vis-à-vis de la face de visualisation de l'afficheur, ladite première portion étant située à une première distance de ladite face de visualisation de l'afficheur. Avantageusement, la première portion du contour est en vis-à-vis de la face de visualisation de l'afficheur correspondant à une zone d'affichage de mesure, d'état ou de symbole.

De préférence, le rouleau comporte une zone de roulement compressible. Avantageusement ; la première distance est dimensionnée pour créer une compression du rouleau sur ladite face de l'afficheur lorsque ledit rouleau parcourt ladite première portion du contour, ladite compression exerçant la pression calibrée sur la face de visualisation dudit afficheur.

Avantageusement, le mécanisme presseur est agencé pour que le rouleau parcourt la première portion du contour lors de l'activation de la manette d'actionnement pour actionner le contact électrique en position fermée.

Préférentiellement, le contour comporte une seconde portion agencée pour que le rouleau parcourt la seconde portion du contour lors de l'activation de la manette d'actionnement pour actionner le contact électrique en position ouverte.

Avantageusement, la seconde portion est située à une seconde distance de la face de visualisation de l'afficheur, la seconde distance étant supérieure à la première distance.

L'invention décrit également un appareil de coupure de courant électrique tel que décrit précédemment comportant, en outre :
- au moins un capteur de courant agencé pour fournir un signal représentatif du courant circulant dans le conducteur de courant, et
- un circuit de mesure relié au capteur de courant pour effectuer une ou plusieurs mesures de grandeur électrique, ledit circuit de mesure étant relié au circuit de commande d'affichage,
de façon à ce que le circuit de mesure effectue une mesure d'un courant circulant dans la ligne de courant.

Avantageusement, le circuit de commande d'affichage compare la mesure du courant mesuré par le circuit de mesure à un seuil défaut prédéterminé pour commander l'affichage d'une valeur du courant mesuré ou d'un symbole sur l'afficheur quand ladite mesure est supérieure au seuil défaut prédéterminé. Selon une variante, le circuit de commande d'affichage compare la mesure du courant mesuré par le circuit de mesure à au moins un seuil maximum prédéterminé pour commander l'affichage sur l'afficheur d'un symbole correspondant au seuil maximum prédéterminé quand ladite mesure est supérieure audit seuil maximum prédéterminé.

Avantageusement, le au moins au moins un capteur de courant fournit de l'énergie pour alimenter les circuits de mesure et de commande d'affichage. Préférentiellement, le circuit de commande d'affichage comporte une entrée de commande pour effacer l'affichage de la mesure ou du symbole affiché sur l'afficheur.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un synoptique fonctionnel d'un appareil de coupure de courant comportant un module d'affichage et un mécanisme presseur selon un mode de réalisation préférentiel de l'invention,
- la figure 2 est une vue en perspective du module d'affichage et du mécanisme presseur selon un mode de réalisation préférentiel de l'invention,
- les figures 3A, 3B, 3C et 3D représentent des vues de profil du mécanisme presseur et du module d'affichage illustrant le parcours d'un rouleau du mécanisme presseur en quatre points d'un contour prédéterminé,
- la figure 4 représente un schéma d'un ensemble de circuits destinés à mesurer et afficher un dépassement d'un seuil de courant de défaut coupé par l'appareil de coupure, et
- la figure 5 représente un schéma d'un ensemble de circuits destinés à mesurer et afficher un dépassement de plusieurs seuils de courant circulant dans l'appareil de coupure.

### DESCRIPTION DETAILLEE DE MODES DE REALISATION PREFERES

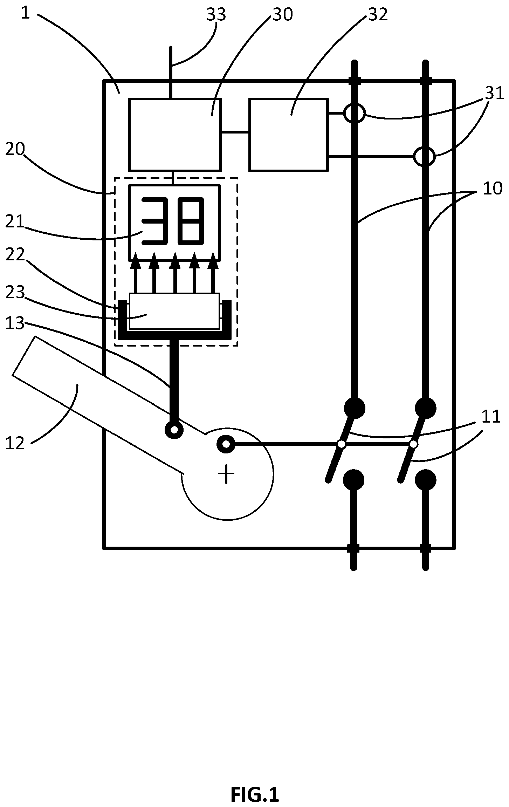

La figure 1 représente un synoptique fonctionnel d'un appareil de coupure de courant 1. Un tel appareil de coupure peut être un disjoncteur destiné à la protection d'une partie d'une installation électrique contre un défaut électrique tel qu'un court-circuit, un contacteur destiné à commander l'alimentation électrique d'un récepteur ou encore un interrupteur destiné à ouvrir ou fermer tout ou partie d'une installation électrique. Un appareil de coupure de courant 1 comporte au moins une ligne de courant 10. Deux lignes de courant 10 sont représentées en figure 1, correspondant à une installation électrique monophasée. Dans une installation électrique industrielle triphasée, on dénombre trois lignes de courant correspondant aux trois phases, ou quatre lignes de courant lorsqu'une ligne neutre est distribuée avec les trois phases. La circulation du courant est établie ou coupée par l'appareil de coupure 1 au moyen de contacts électriques 11. En position fermée, un contact électrique 11 établit la circulation d'un courant dans un conducteur de courant électrique 10. En position ouverte, le contact électrique 11 coupe le courant électrique dans le conducteur de courant 10. Les contacts électriques 11 sont commandés par une manette d'actionnement 12 actionnée manuellement par un opérateur ou actionnée automatiquement par un dispositif de détection de défaut, par exemple un détecteur de court-circuit, au moyen d'un organe de commande non représenté sur la figure 1. L'appareil de coupure selon l'invention comporte un module d'affichage 20. Ledit module d'affichage 20 comporte un afficheur bistable 21. Un afficheur bistable est un afficheur qui maintient l'information affichée sur une de ses faces, appelée face de visualisation, après coupure de son alimentation. L'information affichée peut être un ou plusieurs chiffres, des caractères alphanumériques ou des symboles. Un tel afficheur bistable est préférentiellement constitué par des cristaux liquides cholestériques. L'affichage sur l'afficheur bistable 21 est commandé par un circuit de commande d'affichage 30. Le circuit de commande d'affichage 30 et relié à l'afficheur bistable 21 pour commander l'affichage ou l'extinction de tout ou partie des chiffres, caractères ou symboles affichés sur l'afficheur 21. Selon l'invention, l'afficheur 21 est commandable également par pression : l'application d'une pression sur la face de visualisation, par exemple au moyen d'un dispositif mécanique, provoque une orientation permanente des cristaux liquides composant l'afficheur 21 selon une même direction, les inscriptions qui étaient affichées sont effacées. Selon un mode de réalisation préférentiel de l'invention, la manette d'actionnement 12 est reliée à un mécanisme presseur 22 au moyen d'une biellette 13. Le mécanisme presseur 22 comporte un rouleau 23 entraîné par la biellette 13, ledit rouleau 23 exerçant une pression sur la face de visualisation de l'afficheur 21 dans une phase de son déplacement.

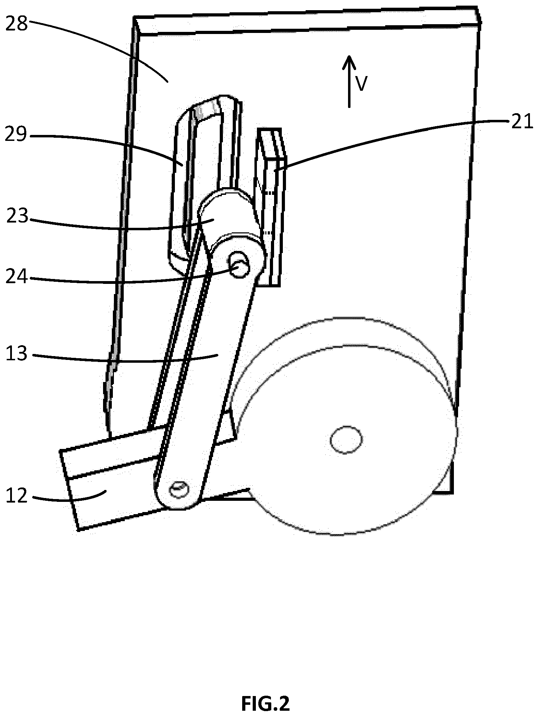

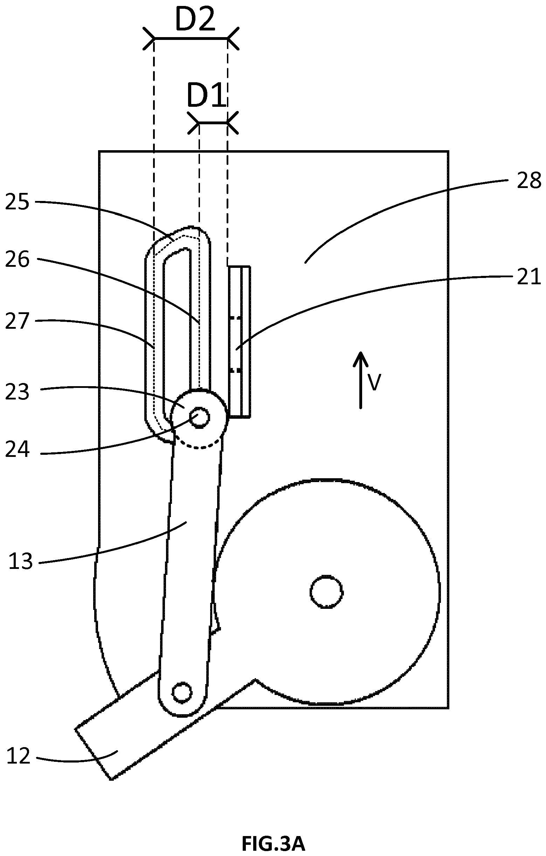

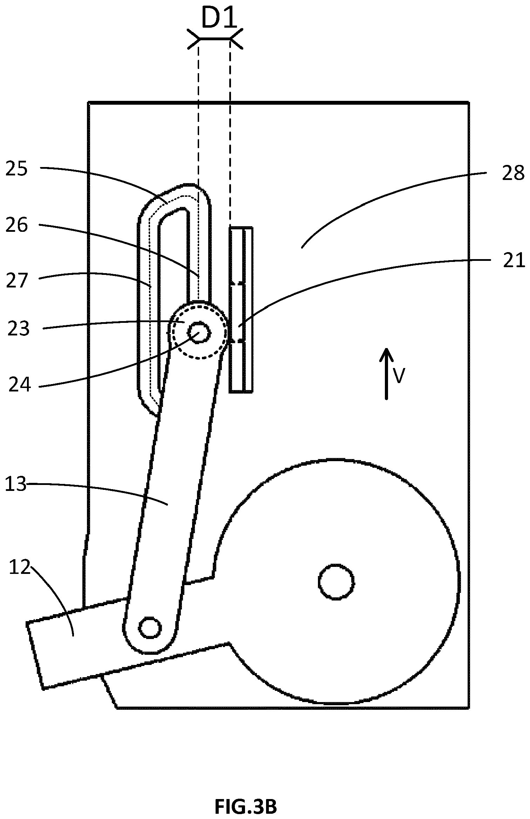

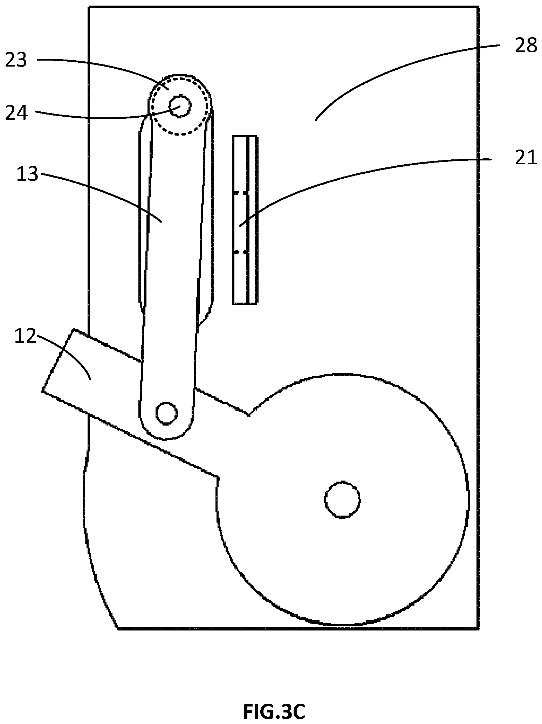

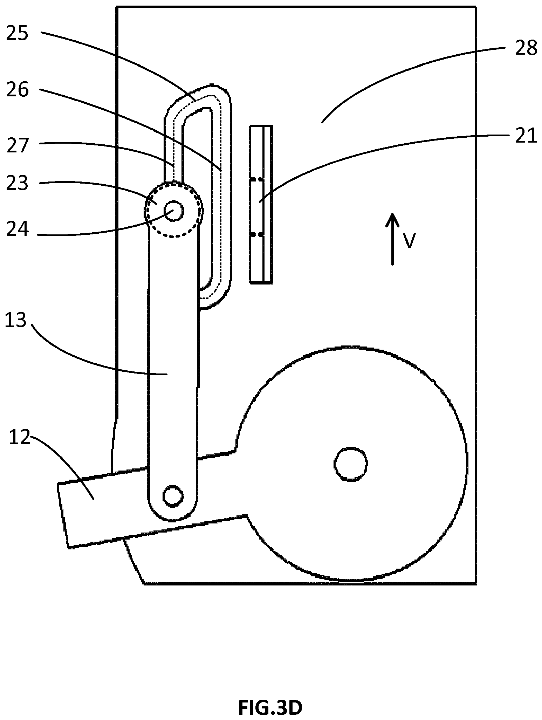

La figure 2 représente une vue en perspective du module d'affichage 20 et du mécanisme presseur 22. Le mécanisme presseur 22 comporte une paroi 28 placée dans un plan selon une direction verticale V perpendiculairement à la face de visualisation de l'afficheur 21. La direction verticale est représentée sur la figure 2 par une flèche V. La paroi 28 comporte une rainure 29 formant un contour prédéterminé 25. Le rouleau comporte un axe de rotation 24 dont une extrémité est engagée dans la rainure 29. Ainsi l'axe 24 du rouleau 23 est guidé dans son déplacement par la rainure 29 imposant ainsi un déplacement de l'ensemble axe et rouleau selon le contour 25. Les figures 3A, 3B, 3C et 3D représentent des vues de profil du mécanisme presseur 22 et du module d'affichage 20 illustrant le parcours du rouleau 23 en quatre points du contour 25. Une première position de référence est illustrée en figure 3A, correspondant à un appareil de coupure 1 dans un état stable, la manette d'actionnement de l'interrupteur est en position basse, les contacts 11 étant ouverts. Dans une première phase, pour fermer les contacts 11, l'opérateur active la manette 12 dans le sens indiqué par la flèche V. La manette d'actionnement actionne la fermeture des contacts 11 et, au moyen de la biellette 13, active le roulement du rouleau 23 en suivant une première portion 26 du contour 25. La première portion 26 est parallèle et en vis-à-vis de la face de visualisation de l'afficheur 21 correspondant à une zone d'affichage de mesure, d'état de l'appareil électrique ou de symbole. La figure 3B illustre une deuxième position de référence montrant le rouleau 23 sensiblement au milieu de la première portion 26. La figure 3C illustre une troisième position de référence correspondant à la manette d'actionnement en position haute, les contacts 11 sont fermés. L'appareil de coupure 1 peut rester dans cette troisième position tant qu'une commande d'ouverture des contacts 11 n'est pas activée. Si l'opérateur décide d'ouvrir les contacts 11, il actionne la manette d'activation 12 dans le sens inverse indiqué par la flèche V. La biellette 13 entraîne le rouleau selon une seconde portion 27 du contour 25. La figure 3D correspond à une quatrième position de référence illustrant le passage du rouleau sensiblement au milieu de la seconde portion 27. A la fin de la manoeuvre d'ouverture des contacts 11, la manette d'actionnement est en position telle qu'illustrée en figure 3A.

Sur la figure 3A, nous définissons une première distance D1 comme étant la distance entre le centre de l'axe 24 du rouleau 23 et la face de visualisation de l'afficheur 21 lorsque ledit rouleau 23 parcourt la première portion 26. La manette d'actionnement de l'interrupteur est en position basse, le rouleau est situé à une première extrémité de la première portion 26 du contour 25. Lors de l'activation de la manette d'actionnement 12, l'opérateur monte la manette d'actionnement dans le sens vertical de bas en haut comme indiqué par la flèche V. La biellette 13 entraîne le rouleau 23 dans la rainure 29 selon la première portion 26 du parcours 25 dans le sens indiqué par la flèche V. La figure 3B montre le rouleau sensiblement en milieu de la première portion 26. Afin d'exercer une pression sur la face de visualisation de l'afficheur 21 lors de l'activation de la manette d'actionnement, la première distance D1 est légèrement inférieure au rayon r du rouleau 23 de telle sorte que le rouleau 23 est en compression sur la face de visualisation de l'afficheur 21. Par exemple, la première distance D1 est égale à 4,5 millimètres, le rayon r du rouleau est égal à 5 millimètres. Ainsi le rouleau subit une compression égale à (r - D1) soit 0,5 millimètres. La première portion 26 étant parallèle à la face de visualisation de l'afficheur 21, la compression du rouleau génère une pression sur toute la face de visualisation de l'afficheur 21 en vis-à-vis de la première portion 26 du contour 25. L'afficheur 21 est commandable par pression, la circulation du rouleau 23 dans la première portion 26 provoque une orientation des cristaux liquides composant l'afficheur 21 selon une même direction, les inscriptions qui étaient visibles sur la face de visualisation de l'afficheur 21 sont effacées. Ainsi les informations affichées sur l'afficheur 21 sont réinitialisées dans la phase de fermeture des contacts 11 de l'appareil de coupure 1. Cette opération ne nécessite pas d'énergie électrique stockée dans une batterie ou prélevée par une alimentation auxiliaire. La seule énergie mécanique nécessaire au réarmement de l'appareil est suffisante.

La pression exercée par le rouleau sur la face de visualisation de l'afficheur 21 doit être une pression calibrée afin de ne pas causer de dommage mécanique à l'afficheur 21 lors du passage du rouleau 23. Préférentiellement la pression calibrée est comprise entre 100 grammes/cm² et 500 grammes/cm². Selon un mode de réalisation préférentielle, le rouleau 23 est composé d'un matériau compressible, par exemple du caoutchouc ou un polymère sous forme de mousse de haute densité. Il peut également être constitué de plusieurs couches de matériaux de densité différente, la couche externe étant de préférence composée de caoutchouc ou polymère. Ces matériaux sont caractérisés par une raideur K. La force F exercée par le rouleau sur la face de visualisation est proportionnelle à la raideur K et à la compression du rouleau, F = K . (r - D1). La pression calibrée est ajustée soit en adaptant la première distance D1 à la raideur K du matériau employé, cette distance pouvant être ajustée par un réglage mécanique de la première distance D1, soit en utilisant un matériau de raideur K adaptée.

Une manoeuvre d'ouverture des contacts électriques 11 est réalisée par un actionnement de la manette d'actionnement 12 en sens inverse de la flèche V. Lors de cette manoeuvre, les données affichées par l'afficheur 21 ne doivent pas être effacées afin de garder toute information utile relative à la cause de l'ouverture des contacts. Pour cela, lors de l'actionnement de la manette d'actionnement 12 en sens inverse de la flèche V, l'axe du rouleau 23 est guidé par la rainure 29 selon la seconde portion 27 du contour 25. Préférentiellement, des cliquets, non représentés, orientent l'axe du rouleau vers la seconde portion 27 dès que ledit rouleau circule en sens inverse de la flèche V. Ladite seconde portion 27 est située à une seconde distance D2 de la face de visualisation de l'afficheur 21, ladite seconde distance D2 étant supérieure à la première distance D1. Préférentiellement, D2 est supérieure au rayon r du rouleau 23. Ainsi, lors de la manoeuvre d'ouverture des contacts 11, le rouleau 23, guidé par la rainure 29 selon la seconde portion 27 du contour 25, n'exerce pas de pression sur la face d'affichage. L'afficheur 21 ayant des propriétés de bistabilité, les inscriptions visibles sur la face de visualisation de l'afficheur 21 sont conservées. D'autre part, la circulation du rouleau 23 selon la seconde portion 27 prélève une part faible de l'énergie mécanique nécessaire à l'ouverture des contacts 11. La circulation du rouleau 23 a ainsi un impact faible sur l'opération d'ouverture des contacts et en particulier n'allonge pas notablement le temps nécessaire à l'ouverture des contacts.

La manoeuvre d'ouverture des contacts 11 peut être réalisée soit par intervention manuelle d'un opérateur, soit commandée automatiquement par un dispositif de détection de défaut venant actionner la manette d'actionnement au moyen d'un mécanisme non représenté. En variante, le mécanisme presseur 22 est relié à un mécanisme d'actionnement des contacts 11 au moyen de la biellette 13 afin d'être activé par le mouvement des contacts.

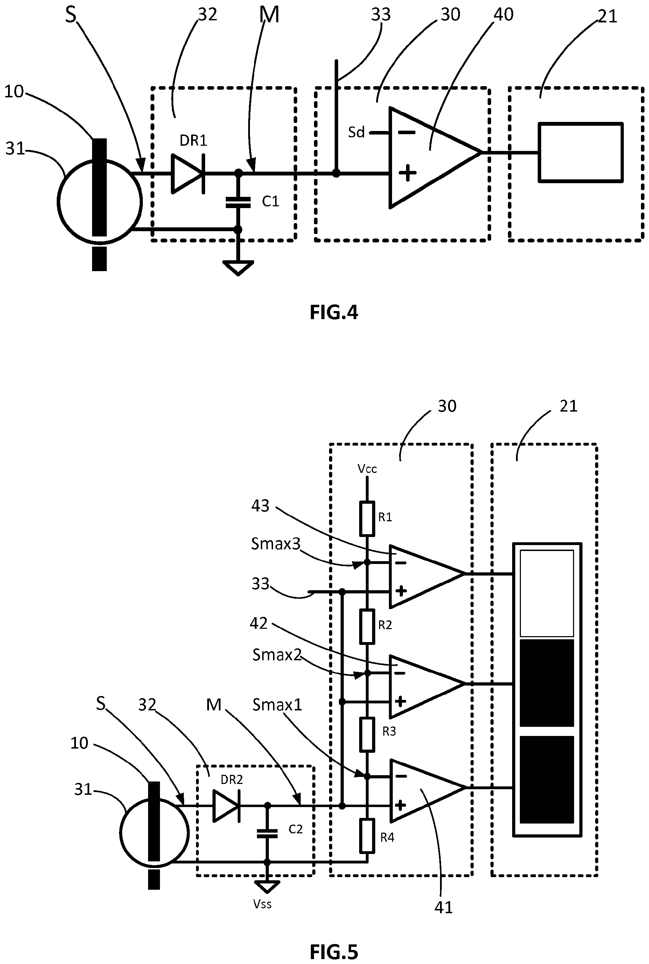

De nombreux appareils de coupure de courant électrique 1 disposent de moyens magnétothermiques de détection de défaut constitués de composants électromécaniques n'offrant pas d'indication permettant de différencier un déclenchement causé par une surcharge ou par un court-circuit. La figure 4 représente un schéma d'un ensemble de circuits destinés à afficher un dépassement d'un seuil de courant de défaut coupé par l'appareil de coupure 1. Au moins un capteur de courant 31 mesure un courant circulant dans une ligne de courant 10. Le capteur de courant 31 est relié au circuit de mesure 32 et fournit un signal S représentatif du courant circulant dans la ligne de courant 10. Ledit circuit de mesure 32 effectue une mesure M du courant circulant dans la ligne de courant 10. Pour cela, le signal S est redressé et filtré au moyen d'une diode de redressement DR1 et d'un condensateur C1. Le circuit de mesure 32 est relié au circuit de commande d'affichage 30. Le circuit de commande d'affichage 30 comporte un comparateur 40 effectuant une comparaison entre la mesure M et un seuil prédéterminé Sd. De préférence, le seuil prédéterminé Sd est compris entre un niveau de mesure M correspondant à une surcharge et un niveau de mesure M correspondant à un court-circuit. Par exemple, Sd est compris entre 120% et 300% du courant nominal de l'appareil de coupure 1. Si la mesure M est supérieure au seuil prédéterminé Sd, le circuit de mesure 30 commande l'affichage d'un symbole sur l'afficheur 21, par exemple un symbole « C-C » pour signifier que l'appareil de coupure a mesuré un courant supérieur à 300% du courant nominal, ce qui correspond à un court-circuit, avant d'ouvrir les contacts 11. Quand l'appareil 11 a ouvert les contacts mais que le symbole «C-C» n'est pas affiché, il s'agit simplement d'une surcharge ou d'une ouverture manuelle.

En variante, illustrée en figure 5, les circuits de mesure 30 et d'affichage 21 sont agencés pour donner une indication sur le courant maximum ayant circulé dans la ligne de courant 10. Le capteur de courant 31 et le circuit de mesure 32 ont la fonction décrite précédemment. Le circuit de commande d'affichage 30 comporte plusieurs comparateurs 41, 42, 43 effectuant respectivement une comparaison entre la mesure M appliquée à leur entrée positive et un seuil prédéterminé Smax1, Smax2 Smax3 appliqué à leur entrée négative. Les seuils Smax1, Smax2 Smax3 sont réalisés par division successive d'une tension Vcc au moyen de résistances R1, R2, R3, R4 formant un pont diviseur résistif référencé par rapport à un potentiel de référence Vss. L'ajustage de la valeur des résistances R1, R2, R3, R4 définit les seuils Smax1, Smax2 Smax3. Par construction, Smax1 est inférieur à Smax2 et Smax2 est inférieur à Smax3. La sortie de chaque comparateur 41, 42, 43 est reliée à un symbole d'affichage de l'afficheur 21. Ainsi, quand la mesure M dépasse le seuil Smax1, un premier symbole est affiché sur l'afficheur 21. Quand la mesure M dépasse le seuil Smax2, un deuxième symbole est affiché sur l'afficheur 21. Le seuil Smax2 étant supérieur au seuil Smax1 le premier symbole reste affiché. L'afficheur 21 se présente sous la forme d'un empilement de barres (en anglais « bargraph ») représenté en figure 5. Un troisième symbole est affiché quand la mesure M dépasse le seuil Smax3. Il est évident que nombre de seuil n'est pas limité et peut être adapté au besoin de l'utilisateur. Ainsi l'amplitude maximale atteinte par le courant circulant dans la ligne de courant 10 est mémorisée sur l'affichage 21. Un ou plusieurs capteurs 31, un circuit de mesure 32 et un circuit de commande d'affichage 30 peuvent être réalisés à faible coût, dans un encombrement minimal pouvant être implanté dans un appareil de coupure électrique magnétothermique. Un indicateur de dépassement de seuil ou de courant maximum apporte à l'utilisateur une information précieuse au diagnostic d'un défaut dans l'installation électrique.

Optionnellement, au moins un capteur de courant 31 est dédié à la fourniture d'énergie pour alimenter les circuits de mesure 32 et de commande d'affichage 30. Le signal fournit par le capteur de courant est redressé et filtré afin de fournir une tension redressée continue utilisable pour alimenter les circuits de mesure 32 et de commande d'affichage 30. Préférentiellement, lesdits circuits de mesure 32 et de commande d'affichage 30 sont des circuits basse consommation.

En option, le circuit de commande d'affichage 30 comporte une entrée de commande 33 pour effacer l'affichage de la mesure ou du symbole affiché sur l'afficheur 21 par exemple au moyen de l'application d'une tension sur l'entrée de commande 33 pour forcer le basculement des comparateurs 41, 42, 43 dans un état correspondant à un état initial lors d'une mise sous tension. Cette fonction est destinée à initialiser l'affichage sans manoeuvrer la manette d'actionnement, par exemple dans le cadre du test du produit sur une chaîne de fabrication industrielle.

## Revendications

1. Appareil de coupure de courant électrique (1) comportant :
- au moins un contact électrique (11) ayant une position fermée pour établir la circulation d'un courant dans un conducteur de courant électrique (10) et une position ouverte pour couper ledit courant dans ledit conducteur de courant (10),
- une manette d'actionnement (12) agencée pour actionner le contact électrique (11) en position fermée ou en position ouverte,
- un module d'affichage (20) comprenant un afficheur bistable à cristaux liquides (21), et
- un circuit de commande d'affichage (30), relié à l'afficheur (21), pour commander un affichage d'au moins une valeur d'une grandeur électrique ou d'un état de l'appareil de coupure (1) ou d'un symbole sur l'afficheur (21),
**caractérisé en ce que** l'afficheur (21) est commandable par pression et que le module d'affichage (20) comporte un mécanisme presseur (22), relié à la manette d'actionnement (12), ledit mécanisme presseur (22) étant agencé pour exercer une pression sur une face de visualisation dudit afficheur (21) lors d'une activation de la manette d'actionnement (12).

2. Appareil de coupure de courant électrique selon la revendication 1 **caractérisé en ce que** l'afficheur (21) comporte des cristaux liquides cholestériques.

3. Appareil de coupure de courant électrique selon l'une des revendications 1 ou 2 **caractérisé en ce que** le mécanisme presseur (22) comprend un rouleau (23) agencé pour rouler sur la face de visualisation de l'afficheur (21) en exerçant une pression calibrée sur la face dudit afficheur (21).

4. Appareil de coupure de courant électrique selon la revendication 3 **caractérisé en ce que** la pression calibrée exercée par le rouleau (23) est comprise entre 100 grammes/cm² et 500 grammes/cm².

5. Appareil de coupure de courant électrique selon l'une des revendications 3 ou 4 **caractérisé en ce que** le rouleau (23) comporte un axe de rotation (24) ayant au moins une extrémité guidée selon un contour prédéterminé (25).

6. Appareil de coupure de courant électrique selon la revendication 5 **caractérisé en ce que** le mécanisme presseur (22) comporte au moins une paroi (28) perpendiculaire à la face de visualisation de l'afficheur (21), ladite paroi comportant une rainure (29) suivant la forme du contour prédéterminé (25) pour guider l'extrémité de l'axe de rotation (24) du rouleau (23).

7. Appareil de coupure de courant électrique selon l'une des revendications 5 ou 6 **caractérisé en ce que** le contour (25) comporte une première portion (26) parallèle et en vis-à-vis de la face de visualisation de l'afficheur (21), ladite première portion (26) étant située à une première distance (D1) de ladite face de visualisation de l'afficheur.

8. Appareil de coupure de courant électrique selon la revendication 7 **caractérisé en ce que** la première portion (26) du contour (25) est en vis-à-vis de la face de visualisation de l'afficheur (21) correspondant à une zone d'affichage de mesure, d'état ou de symbole.

9. Appareil de coupure de courant électrique selon l'une des revendications 3 à 8 **caractérisé en ce que** le rouleau (23) comporte une zone de roulement compressible.

10. Appareil de coupure de courant électrique selon la revendication 9 **caractérisé en ce que** la première distance (D1) est dimensionnée pour créer une compression du rouleau (23) sur ladite face de l'afficheur (21) lorsque ledit rouleau (23) parcourt ladite première portion (26) du contour, ladite compression exerçant la pression calibrée sur la face de visualisation dudit afficheur (21).

11. Appareil de coupure de courant électrique selon l'une des revendications 1 à 10 **caractérisé en ce que** le mécanisme presseur (22) est agencé pour que le rouleau (23) parcourt la première portion (26) du contour (25) lors de l'activation de la manette d'actionnement (12) pour actionner le contact électrique (11) en position fermée.

12. Appareil de coupure de courant électrique selon la revendication 11 **caractérisé en ce que** le contour (25) comporte une seconde portion (27) agencée pour que le rouleau (23) parcourt la seconde portion (27) du contour (25) lors de l'activation de la manette d'actionnement (12) pour actionner le contact électrique (11) en position ouverte.

13. Appareil de coupure de courant électrique selon la revendication 12 **caractérisé en ce que** la seconde portion (27) est située à une seconde distance (D2) de la face de visualisation de l'afficheur (21), la seconde distance (D2) étant supérieure à la première distance (D1).

14. Appareil de coupure de courant électrique selon l'une des revendications 1 à 13 comportant :
- au moins un capteur de courant (31) agencé pour fournir un signal représentatif du courant circulant dans le conducteur de courant (10), et
- un circuit de mesure (32) relié au capteur de courant (31) pour effectuer une ou plusieurs mesures de grandeur électrique, ledit circuit de mesure (32) étant relié au circuit de commande d'affichage (30),
**caractérisé en ce que** le circuit de mesure (32) effectue une mesure (M) d'un courant circulant dans la ligne de courant (10).

15. Appareil de coupure de courant électrique selon la revendication 14 **caractérisé en ce que** le circuit de commande d'affichage (30) compare la mesure (M) du courant mesuré par le circuit de mesure (32) à un seuil défaut prédéterminé (Sd) pour commander l'affichage d'une valeur du courant mesuré ou d'un symbole sur l'afficheur (21) quand ladite mesure (M) est supérieure au seuil défaut prédéterminé (Sd).

16. Appareil de coupure de courant électrique selon la revendication 14 **caractérisé en ce que** le circuit de commande d'affichage (30) compare la mesure (M) du courant mesuré par le circuit de mesure (32) à au moins un seuil maximum prédéterminé (Smax) pour commander l'affichage sur l'afficheur (21) d'un symbole correspondant au seuil maximum prédéterminé (Smax) quand ladite mesure (M) est supérieure audit seuil maximum prédéterminé (Smax).

17. Appareil de coupure de courant électrique selon l'une des revendications 14 à 16 **caractérisé en ce que** le au moins au moins un capteur de courant (31) fournit de l'énergie pour alimenter les circuits de mesure (32) et de commande d'affichage (30).

18. Appareil de coupure de courant électrique selon l'une des revendications 1 à 17 **caractérisé en ce que** le circuit de commande d'affichage (30) comporte une entrée de commande (33) pour effacer l'affichage de la mesure ou du symbole affiché sur l'afficheur (21).

## Patentansprüche

1. Stromunterbrechungsgerät (1), umfassend:
- mindestens einen elektrischen Kontakt (11), der eine geschlossene Position zur Herstellung der Zirkulation eines Stroms in einem elektrischen Stromleiter (10) und eine offene Position zur Unterbrechung des Stroms in dem Stromleiter (10) aufweist,
- einen Betätigungshebel (12), der dazu vorgesehen ist, den elektrischen Kontakt (11) in die geschlossene Position oder in die offene Position zu bringen,
- ein Anzeigemodul (20), umfassend eine bistabile Flüssigkristallanzeige (21), und
- eine Anzeigesteuerschaltung (30), die mit der Anzeige (21) verbunden ist, um eine Anzeige mindestens eines Werts einer elektrischen Größe oder eines Zustands des Unterbrechungsgeräts (1) oder eines Symbols auf der Anzeige (21) zu steuern,
**dadurch gekennzeichnet, dass** die Anzeige (21) durch Druck steuerbar ist, und dass das Anzeigemodul (20) einen Druckmechanismus (22) umfasst, der mit dem Betätigungshebel (12) verbunden ist, wobei der Druckmechanismus (22) dazu vorgesehen ist, einen Druck auf eine Anzeigefläche der Anzeige (21) bei einer Aktivierung des Betätigungshebels (12) auszuüben.

2. Stromunterbrechungsgerät nach Anspruch 1, **dadurch gekennzeichnet, dass** die Anzeige (21) cholesterische Flüssigkristalle umfasst.

3. Stromunterbrechungsgerät nach einem der Ansprüche 1 oder 2, **dadurch gekennzeichnet, dass** der Druckmechanismus (22) eine Walze (23) umfasst, die dazu vorgesehen ist, auf der Anzeigefläche der Anzeige (21) zu rollen, wobei sie einen kalibrierten Druck auf die Fläche der Anzeige (21) ausübt.

4. Stromunterbrechungsgerät nach Anspruch 3, **dadurch gekennzeichnet, dass** der von der Walze (23) ausgeübte kalibrierte Druck zwischen 100 Gramm/cm² und 500 Gramm/cm² beträgt.

5. Stromunterbrechungsgerät nach einem der Ansprüche 3 oder 4, **dadurch gekennzeichnet, dass** die Walze (23) eine Rotationsachse (24) umfasst, die mindestens ein Ende aufweist, das gemäß einer vorbestimmten Kontur (25) geführt wird.

6. Stromunterbrechungsgerät nach Anspruch 5, **dadurch gekennzeichnet, dass** der Druckmechanismus (22) mindestens eine Wand (28) senkrecht auf die Anzeigefläche der Anzeige (21) umfasst, wobei die Wand eine Nut (29) gemäß der Form der vorbestimmten Kontur (25) umfasst, um das Ende der Drehachse (24) der Walze (23) zu führen.

7. Stromunterbrechungsgerät nach einem der Ansprüche 5 oder 6, **dadurch gekennzeichnet, dass** die Kontur (25) einen ersten Abschnitt (26) parallel zu und gegenüber der Anzeigefläche der Anzeige (21) umfasst, wobei sich der erste Abschnitt (26) in einem ersten Abstand (D1) zur Anzeigefläche der Anzeige befindet.

8. Stromunterbrechungsgerät nach Anspruch 7, **dadurch gekennzeichnet, dass** der erste Abschnitt (26) der Kontur (25) gegenüber der Anzeigefläche der Anzeige (21) entsprechend einer Mess-, Zustands- oder Symbolanzeigezone.

9. Stromunterbrechungsgerät nach einem der Ansprüche 3 bis 8, **dadurch gekennzeichnet, dass** die Walze (23) eine komprimierbare Rollzone umfasst.

10. Stromunterbrechungsgerät nach Anspruch 9, **dadurch gekennzeichnet, dass** der erste Abstand (D1) dimensioniert ist, um eine Kompression der Walze (23) auf der Fläche der Anzeige (21) zu erzeugen, wenn die Walze (23) den ersten Abschnitt (26) der Kontur durchläuft, wobei die Kompression den kalibrierten Druck auf die Anzeigefläche der Anzeige (21) ausübt.

11. Stromunterbrechungsgerät nach einem der Ansprüche 1 bis 10, **dadurch gekennzeichnet, dass** der Druckmechanismus (22) derart vorgesehen ist, dass die Walze (23) den ersten Abschnitt (26) der Kontur (25) bei der Aktivierung des Betätigungshebels (12), um den elektrischen Kontakt (11) in die geschlossene Position zu bringen, durchläuft.

12. Stromunterbrechungsgerät nach Anspruch 11, **dadurch gekennzeichnet, dass** die Kontur (25) einen zweiten Abschnitt (27) umfasst, der derart vorgesehen ist, dass die Walze (23) den zweiten Abschnitt (27) der Kontur (25) bei der Aktivierung des Betätigungshebels (12), um den elektrischen Kontakt (11) in die offene Position zu bringen, durchläuft.

13. Stromunterbrechungsgerät nach Anspruch 12, **dadurch gekennzeichnet, dass** der zweite Abschnitt (27) in einem zweiten Abstand (D2) zur Anzeigefläche der Anzeige (21) angeordnet ist, wobei der zweite Abstand (D2) größer als der erste Abstand (D1) ist.

14. Stromunterbrechungsgerät nach einem der Ansprüche 1 bis 13, umfassend:
- mindestens einen Stromfühler (31), der dazu vorgesehen ist, ein Signal zu liefern, das für den in dem Stromleiter (10) zirkulierenden Strom repräsentativ ist, und
- eine Messschaltung (32), die mit dem Stromfühler (31) verbunden ist, um eine oder mehrere Messungen einer elektrischen Größe durchzuführen, wobei die Messschaltung (32) mit der Anzeigesteuerschaltung (30) verbunden ist,
**dadurch gekennzeichnet, dass** die Messschaltung (32) eine Messung (M) eines in der Stromleitung (10) zirkulierenden Stroms durchführt.

15. Stromunterbrechungsgerät nach Anspruch 14, **dadurch gekennzeichnet, dass** die Anzeigesteuerschaltung (30) die Messung (M) des von der Messschaltung (32) gemessenen Stroms mit einem vorbestimmten Fehlergrenzwert (Sd) vergleicht, um die Anzeige eines Werts des gemessenen Stroms oder eines Symbols auf der Anzeige (21) zu steuern, wenn die Messung (M) höher als der vorbestimmte Fehlergrenzwert (Sd) ist.

16. Stromunterbrechungsgerät nach Anspruch 14, **dadurch gekennzeichnet, dass** die Anzeigesteuerschaltung (30) die Messung (M) des von der Messschaltung (32) gemessenen Stroms mit mindestens einem vorbestimmten Maximalgrenzwert (Smax) vergleicht, um die Anzeige eines Symbols entsprechend dem vorbestimmten Maximalgrenzwert (Smax) auf der Anzeige (21) zu steuern, wenn die Messung (M) höher als der vorbestimmte Maximalgrenzwert (Smax) ist.

17. Stromunterbrechungsgerät nach einem der Ansprüche 14 bis 16, **dadurch gekennzeichnet, dass** der mindestens eine Stromfühler (31) Energie zur Versorgung der Messschaltung (32) und der Anzeigesteuerschaltung (30) liefert.

18. Stromunterbrechungsgerät nach einem der Ansprüche 1 bis 17, **dadurch gekennzeichnet, dass** die Anzeigesteuerschaltung (30) einen Steuereingang (33) umfasst, um die Anzeige der Messung und des auf der Anzeige (21) angezeigten Symbols zu löschen.

## Claims

1. Electric current switchgear (1) comprising:
- at least one electrical contact (11) having a closed position to establish the circulation of a current in an electric current conductor (10) and an open position for cutting said current in said current conductor (10),
- an actuating handle (12) arranged to actuate the electrical contact (11) in closed position or in open position,
- a display module (20) comprising a bistable liquid crystal display (21), and
- a display control circuit (30) linked to the display (21), to control a display of at least one value of an electrical quantity or of a state of the switchgear (1) or of a symbol on the display (21),
**characterized in that** the display (21) can be controlled by pressure and that the display module (20) comprises a presser mechanism (22), linked to the actuating handle (12), said presser mechanism (22) being arranged to exert a pressure on a display face of said display (21) upon an activation of the actuating handle (12).

2. Electric current switchgear according to Claim 1, **characterized in that** the display (21) comprises cholesteric liquid crystals.

3. Electric current switchgear according to one of Claims 1 and 2, **characterized in that** the presser mechanism (22) comprises a roller (23) arranged to roll over the display face of the display (21) while exerting a gauged pressure on the face of said display (21).

4. Electric current switchgear according to Claim 3, **characterized in that** the gauged pressure exerted by the roller (23) lies between 100 grams/cm² and 500 grams/cm².

5. Electric current switchgear according to one of Claims 3 and 4, **characterized in that** the roller (23) comprises an axis of rotation (24) having at least one end guided along a predetermined contour (25).

6. Electric current switchgear according to Claim 5, **characterized in that** the presser mechanism (22) comprises at least one wall (28) at right angles to the display face of the display (21), said wall comprising a groove (29) following the form of the predetermined contour (25) to guide the end of the axis of rotation (24) of the roller (23).

7. Electric current switchgear according to one of Claims 5 and 6, **characterized in that** the contour (25) comprises a first portion (26) parallel to and facing the display face of the display (21), said first portion (26) being situated at a first distance (D1) from said display face of the display.

8. Electric current switchgear according to Claim 7, **characterized in that** the first portion (26) of the contour (25) is facing the display face of the display (21) corresponding to a measurement, state or symbol display zone.

9. Electric current switchgear according to one of Claims 3 to 8, **characterized in that** the roller (23) comprises a compressible rolling zone.

10. Electric current switchgear according to Claim 9, **characterized in that** the first distance (D1) is dimensioned to create a compression of the roller (23) on said face of the display (21) when said roller (23) runs along said first portion (26) of the contour, said compression exerting the gauged pressure on the display face of said display (21).

11. Electric current switchgear according to one of Claims 1 to 10, **characterized in that** the presser mechanism (22) is arranged so that the roller (23) runs along the first portion (26) of the contour (25) upon the activation of the actuating handle (12) to actuate the electric contact (11) in closed position.

12. Electric current switchgear according to Claim 11, **characterized in that** the contour (25) comprises a second portion (27) arranged so that the roller (23) runs along the second portion (27) of the contour (25) upon the activation of the actuating handle (12) to actuate the electrical contact (11) in open position.

13. Electric current switchgear according to Claim 12, **characterized in that** the second portion (27) is situated at a second distance (D2) from the display face of the display (21), the second distance (D2) being greater than the first distance (D1).

14. Electric current switchgear according to one of Claims 1 to 13, comprising:
- at least one current sensor (31) arranged to supply a signal representative of the current circulating in the current conductor (10), and
- a measurement circuit (32) linked to the current sensor (31) to perform one or more electrical quantity measurements, said measurement circuit (32) being linked to the display control circuit (30),
**characterized in that** the measurement circuit (32) performs a measurement (M) of a current circulating in the current line (10).

15. Electric current switchgear according to Claim 14, **characterized in that** the display control circuit (30) compares the measurement (M) of the current measured by the measurement circuit (32) to a predetermined fault threshold (Sd) to control the display of a value of the measured current or of a symbol on the display (21) when said measurement (M) is above the predetermined fault threshold (Sd).

16. Electric current switchgear according to Claim 14, **characterized in that** the display control circuit (30) compares the measurement (M) of the current measured by the measurement circuit (32) to at least one predetermined maximum threshold (Smax) to control the display on the display (21) of a symbol corresponding to the predetermined maximum threshold (Smax) when said measurement (M) is above said predetermined maximum threshold (Smax).

17. Electric current switchgear according to one of Claims 14 to 16, **characterized in that** the at least one current sensor (31) supplies energy to power the measurement circuits (32) and the display control circuit (30).

18. Electric current switchgear according to one of Claims 1 to 17, **characterized in that** the display control circuit (30) comprises a control input (33) to clear the display of the measurement or of the symbol displayed on the display (21).
